# EUROPÄISCHE PATENTSCHRIFT

(11) **EP 0 765 796 B1**
(45) Veröffentlichungstag und Bekanntmachung des Hinweises auf die Patenterteilung: **20.10.1999**
(21) Anmeldenummer: 96112183.7
(22) Anmeldetag: 27.07.1996
(51) Int. Cl.: B62D 43/10

(54) **Anordnung eines Bauteils in der Felgenmulde eines Reserverads**
Arrangement of a component in the rim trough of a spare wheel
Agencement d'un composant dans l'auge de jante d'une roue de secours

(30) Priorität: 29.09.1995 DE 19536511
(43) Veröffentlichungstag der Anmeldung: 02.04.1997
(73) Patentinhaber: Bayerische Motoren Werke Aktiengesellschaft, 80788 München (DE)
(72) Erfinder: Trzaska, Klaus, 86316 Friedberg (DE); Jurr, Reinhold, 81247 München (DE); Schmidt, Wolfgang, 86899 Landsberg (DE); Bruns, Hartmut, 81827 München (DE)

(56) Entgegenhaltungen:
- DE-A- 3 843 673
- DE-U- 8 008 621
- DE-U- 9 320 701
- US-A- 2 631 886

## Beschreibung

Die Erfindung betrifft eine Anordnung eines Bauteils in der Felgenmulde eines Reserverads, mit den im Oberbegriff des Patentanspruches 1 angegebenen Merkmalen.

Eine derartige Anordnung ist bei neueren BMW Fahrzeugen der 7er Baureihe mit Niveauregulierung bekannt, bei der in der Felgenmulde eines im Gepäckraum versenkt angeordneten Reserverades ein Hydraulikaggregat einer Niveauregelungseinrichtung angeordnet und von einem Abdecktopf überdeckt ist. Das Hydraulikaggregat ist von einer Befestigungsschraube durchsetzt, die eine zentrale Nabenöffnung des Reserverades durchsetzt und durch Aufschrauben einer Flügelmutter das Reserverad an dem etwa horizontalen Boden des vertieften Wandbereiches festhält. In der Felgenmulde ist auf die Befestigungsschraube noch eine Mutter aufgeschraubt, über die der ebenfalls von der Befestigungsschraube durchsetzte Abdecktopf gegen den Wandbereich zu belasten ist. Die Befestigungsschraube durchsetzt die Felgenmulde zentral, wodurch das in der Felgenmulde angeordnete Bauteil lediglich ringförmig oder so bemessen sein kann, daß sich dieses Bauteil an einem Umfangsbereich der Felgenmulde anordnen läßt. Die verhältnismäßig lange Befestigungsschraube ist an einem aufwendig gestalteten Befestigungstopf befestigt, der bei einer seitlichen Belastung des Reserverades Biegeverformungen der Befestigungsschraube nicht verhindern kann. Das Reserverad kann bei einer derartigen Belastung an den Abdecktopf stoßen und diesen so verstellen, daß die das Hydraulikaggregat tragende Stützplatte mit dem Abdecktopf in Kontakt kommt, wodurch von dem Hydraulikaggregat verursachte Geräusche nicht mehr über die vorgesehenen elastischen Lagerelemente gedämpft werden, die sich dann über den Abdecktopf auf die Karosserie des Fahrzeugs übertragen können.

Der Erfindung liegt die Aufgabe zugrunde, eine Anordnung eines Bauteils nach dem Oberbegriff des Patentanspruches 1 anzugeben, bei der größere Bauteile in der Felgenmulde mitgeführt werden können und der Abdecktopf lagegenauer festgehalten ist.

Diese Aufgabe ist durch die im Patentanspruch 1 angegebenen Merkmale gelöst. Durch die getrennte Befestigung des Reserverades und des Abdecktopfes an dem Wandbereich sind das Reserverad und der Abdecktopf lagegenauer festgehalten. Das Befestigungselement durchsetzt die Felgenmulde nicht mehr, wodurch in der Felgenmulde ein größeres Bauteil anzuordnen und beispielsweise elastisch abzustützen ist. Das Bauteil oder eine das Bauteil tragende Stützplatte kann über elastische Lagerelemente an dem Abdecktopf abgestützt sein, wodurch eine besonders geräuscharme Abstützung des beispielsweise Geräusche verursachenden Bauteils erreicht ist. Eine derartige Anordnung ist von der Formgestaltung des Wandbereiches weitgehend unabhängig. Das von dem Boden des Abdecktopfes abstehende Befestigungselement kann eine geringe Länge und damit eine größere Steifigkeit aufweisen, wodurch das Reserverad auch bei einem geringer dimensionierten Befestigungselement lagegenau festgehalten ist.

Vorteilhafte Ausgestaltungen der Erfindung sind Gegenstand von Unteransprüchen.

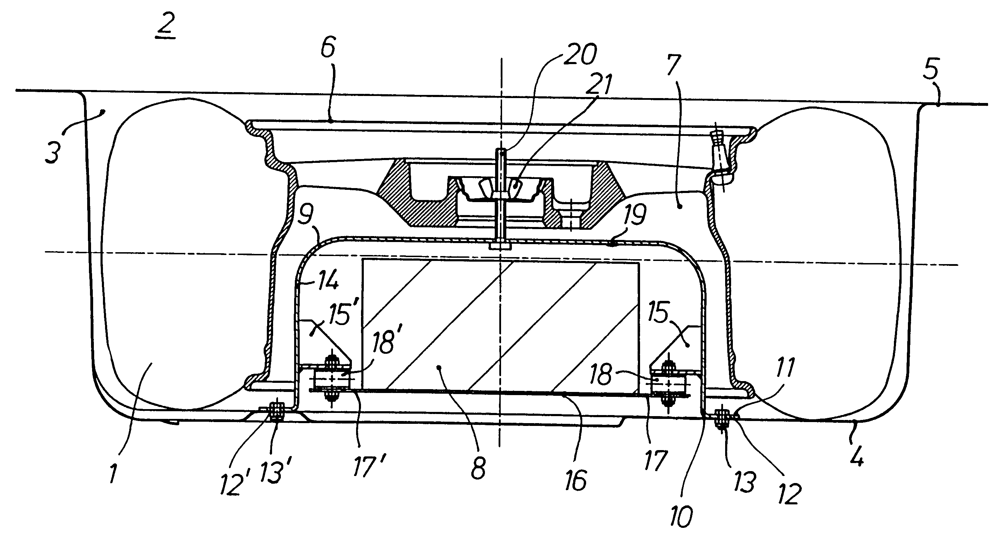

Ein Ausführungsbeispiel der Erfindung wird anhand einer Zeichnung mit einer einzigen Figur erläutert, die einen Querschnitt durch die Achse des Reserverades darstellt.

Das in der einzigen Figur im Querschnitt dargestellte Reserverad 1 ist im Gepäckraum 2 eines Kraftfahrzeugs in einer Vertiefung 3 versenkt angeordnet. Das Reserverad 1 liegt an einem durch den Boden der Vertiefung 3 gebildeten Wandbereich 4 von oben an und verläuft an seiner Oberseite etwa bündig mit dem Boden 5 des Gepäckraumes. In der unteren, durch die Felge 6 des Reserverads 1 gebildeten Felgenmulde 7 ist ein Bauteil 8, beispielsweise ein Hydraulikaggregat einer Niveauregelungseinrichtung angeordnet und von einem Abdecktopf 9 überdeckt. Der Abdecktopf 9 ist im Bereich des zu dem Wandbereich 4 gerichteten Topfrandes 10 mit dem Wandbereich 4 zu verbinden. Hierzu sind an dem Topfrand 10 mehrere radial nach außen gerichtete Kragen oder ein umlaufender Kragen 11 vorgesehen, der mit Durchtrittsöffnungen 12, 12' für Befestigungsschrauben 13, 13' oder dergleichen ausgebildet ist, die durch die Durchtrittsöffnungen 12, 12' in den Wandbereich 4 einschraubbar sind. Am Innenumfang 14 des Abdecktopfes 9 sind mehrere Konsolen 15, 15' befestigt, an denen eine das Bauteil 8 tragende Stützplatte 16 zu befestigen ist. Die Stützplatte 16 ist an seinen über das Bauteil 8 seitlich hinausragenden Bereichen 17, 17' über zugbelastete Gummielemente 18, 18' an den Konsolen 15, 15' lösbar befestigt. Etwa zentral steht von dem Boden 19 des Abdecktopfes 9 eine Befestigungsschraube 20 axial ab, die durch eine zentrale Öffnung in der Felgennabe hindurchragt. Mittels einer von oben auf die Befestigungsschraube 20 aufschraubbaren Flügelmutter 21 kann das Reserverad 1 axial gegen den Wandbereich 4 belastet werden und dadurch ausreichend stabil festgehalten sein. Das Bauteil 8 ist in nicht dargestellter Weise fest mit der Stützplatte 16 zu verbinden und bei Bedarf durch Lösen entsprechender Verbindungsmittel von dieser Stützplatte 16 zu lösen.

Die Erfindung ist auch in einer von dem Ausführungsbeispiel abweichenden Weise auszuführen. Die bei dem Ausführungsbeispiel zugbelasteten Gummielemente können durch andere elastische Stützelemente gebildet sein, die einzeln oder insgesamt zug- oder druckbelastet sein können. Eine direkte Abstützung des Bauteils oder einer das Bauteil tragenden Stützplatte oder dergleichen an dem Abdecktopf oder an dem Wandbereich ist möglich. Das bei dem Ausführungsbeispiel durch eine Befestigungsschraube gebildete Befestigungselement kann auch ein anderes Befestigungselement sein, das allein oder zusammen mit einem weiteren, beispielsweise mit dem Befestigungselement verbindbaren Teil das Reserverad an dem Wandbereich oder an dem Abdecktopf festhalten kann. Hierzu ist die Verwendung einer Clips- bzw. Rastverbindung möglich, die ein Hintergreifen einer Stützschulter an der Felge, vorzugsweise an der Felgennabe des Reserverades ermöglicht.

## Patentansprüche

1. Abstützung eines Bauteils in der Felgenmulde eines Reserverads, das axial an einem Wandbereich angelegt über ein mit der Felge zu verbindendes Befestigungselement an dem Wandbereich festgehalten ist, wobei das Bauteil in der Felgenmulde angeordnet und von einem Abdecktopf überdeckt ist, der mit seinem Topfrand zu dem Wandbereich gerichtet an diesem zu befestigen ist, dadurch gekennzeichnet, daß das Befestigungselement (20) von dem Boden (19) des Abdecktopfes (9) abstehend an diesem befestigt ist und der Abdecktopf (9) über weitere Befestigungselemente (Schrauben 13, 13') mit dem Wandbereich (4) zu verbinden ist.

2. Abstützung nach Anspruch 1, dadurch gekennzeichnet, daß der Abdecktopf (9) im Bereich des Topfrandes (10) mit dem Wandbereich (4) zu verbinden ist.

3. Abstützung nach Anspruch 2, dadurch gekennzeichnet, daß an dem Topfrand (10) ein radial nach außen gerichteter Kragen (11) mit Durchtrittsöffnungen (12, 12') für Schrauben (13, 13') oder dergleichen ausgebildet ist.

4. Abstützung nach einem der Ansprüche 1 bis 3, dadurch gekennzeichnet, daß am Innenumfang (14) des Abdecktopfes (9) mehrere Konsolen (15, 15') befestigt sind, an denen eine das Bauteil (8) tragende Stützplatte (16) zu befestigen ist.

5. Abstützung nach Anspruch 4, dadurch gekennzeichnet, daß die Stützplatte (16) über zug- und/oder druckbelastete Gummielemente (18, 18') an den Konsolen (15, 15') lösbar befestigt ist.

6. Abstützung nach einem der Ansprüche 1 bis 5, dadurch gekennzeichnet, daß der Wandbereich (4) etwa horizontal verläuft.

7. Abstützung nach einem der Ansprüche 4 bis 6, dadurch gekennzeichnet, daß das Bauteil (8) fest mit der Stützplatte (16) verbunden oder zu verbinden ist.

8. Abstützung nach einem der Ansprüche 1 bis 7, dadurch gekennzeichnet, daß das Befestigungselement eine drehfest angeordnete Befestigungsschraube (20) mit einer aufschraubbaren Flügelmutter (21) ist.

## Claims

1. A means for holding a component in the rim cavity of a spare wheel, the component being laid axially on a wall area and fastened thereto by a fastening element for connecting to the rim, the component being disposed in the rim cavity and covered by a cap, the edge of the cap being directed towards the wall area and fastened thereto, characterised in that the fastening element (20) projects from and is secured to the base (19) of the covering cap (9), and the covering cap (9) is connected to the wall area (4) by additional fastening elements (screws 13, 13').

2. A means according to claim 1, characterised in that the edge region (10) of the cap (9) is connected to the wall area (4).

3. A means according to claim 2, characterised in that a radially outward collar (11) with openings (12, 12') for screws (13, 13') or the like is formed on the edge (10) of the cap.

4. A means according to any of claims 1 to 3, characterised in that a number of brackets (15, 15') are fastened to the inner periphery (14) of the cap (9), so that a supporting plate (16) for holding the component (8) can be fastened to the brackets.

5. A means according to claim 4, characterised in that the supporting plate (16) is releasably fastened to the brackets (15, 15') by tension-loaded and/or pressure-loaded rubber elements (18, 18').

6. A means according to any of claims 1 to 5, characterised in that the wall region (4) is approximately horizontal.

7. A means according to any of claims 4 to 6, characterised in that the component (8) is or must be firmly connected to the supporting plate (16).

8. A means according to any of claims 1 to 7, characterised in that the fastening element is a non-rotatably mounted fastening screw (20) with a screwable wing nut (21).

## Revendications

1. Appui d'un composant dans la cavité de la jante d'une roue de secours qui est appliquée axialement contre une zone de paroi par un élément de fixation relié à la jante qui bloque contre la zone de paroi, le composant étant logé dans la cavité de la jante pour être recouvert par une calotte formant couvercle dont le bord est tourné vers la zone de paroi pour être fixé à celle-ci,
caractérisé en ce que
l'élément de fixation (20) est fixé de façon à venir en saillie par rapport au fond (19) de la calotte (9) et cette calotte (9) est reliée par d'autres éléments de fixation (vis 13, 13') à la zone de paroi (4).

2. Appui selon la revendication 1,
caractérisé en ce que
la calotte (9) est reliée à la zone de paroi (4) au niveau du bord (10) de la calotte.

3. Appui selon la revendication 2,
caractérisé en ce que
le bord (10) de la calotte comporte une collerette (11) dirigée radialement vers l'extérieur avec des passages (12, 12') pour les vis (13, 13').

4. Appui selon l'une quelconque des revendications 1 à 3,
caractérisé en ce que
la paroi intérieure (14) de la calotte (9) porte plusieurs consoles (15, 15'), fixées solidairement, et sur lesquelles se fixe une plaque de support (16) portant le composant (8).

5. Appui selon la revendication 4,
caractérisé en ce que
la plaque d'appui (16) est fixée de manière amovible aux consoles (15, 15') par des éléments en caoutchouc (18, 18') sollicités en traction et/ou en compression.

6. Appui selon l'une des revendications 1 à 5,
caractérisé en ce que
la zone de paroi (4) est sensiblement horizontale.

7. Appui selon l'une quelconque des revendications 4 à 6,
caractérisé en ce que
le composant (8) est relié ou doit être relié solidairement à la plaque de support (16).

8. Appui selon l'une quelconque des revendications 1 à 7,
caractérisé en ce que
l'élément de fixation est une vis de fixation (20) montée solidairement en rotation et recevant un écrou-papillon (21), vissé.
